(19) Europäisches Patentamt
European Patent Office
Office européen des brevets

(11) Publication number: **0 103 370**
**A1**

(12) # EUROPEAN PATENT APPLICATION

(21) Application number: **83304089.2**

(22) Date of filing: **14.07.83**

(51) Int. Cl.³: **F 02 C 3/10**, F 02 C 7/36

(30) Priority: **11.08.82 GB 8223142**

(43) Date of publication of application: **21.03.84 Bulletin 84/12**

(84) Designated Contracting States: **DE FR GB IT SE**

(71) Applicant: **ROLLS-ROYCE LIMITED, 65 Buckingham Gate, London, SW1E 6AT (GB)**

(72) Inventor: **Banks, Michael Donald, 1 Inverary Close, Windy Arbour Kenilworth Warwickshire (GB)**
Inventor: **Jubb, Albert, 2 Thickthorn Close, Kenilworth Warwickshire (GB)**

(74) Representative: **Kelvie, George Thomas, Patent Departement Rolls-Royce Limited P.O. Box 31 Moor Lane, Derby DE2 8BJ (GB)**

(54) **Improvements in or relating to gas turbine engines.**

(57) A heat exchanged gas turbine engine power plant primarily intended for land vehicles has a two stage axial compressor (112) driven by a two stage low pressure turbine (114) through a shaft (116). A high pressure turbine (118) constitutes a power turbine which drives a load (not shown), through a shaft (122). The shafts are co-axial and can be coupled together by a free wheel mechanism (130).

This arrangement of turbines in series in which the high pressure turbine drives the load enables the turbine entry temperature to be kept high over most of the power range without the need for variable power turbine inlet guide vanes.

Also the engine provides a braking effect, tow starting is possible, and power turbine overspeed in event of load loss is checked.

The heat exchanger ducting relatively simple and lightweight and the location of the combustion chamber (128) at the rear end of the engine makes access to the high temperature engine components relatively easy.

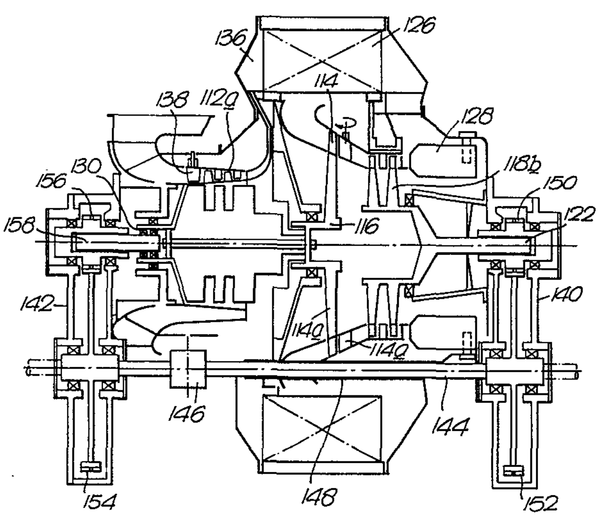


EP 0 103 370 A1

This invention relates to gas turbine engines, and is particularly concerned with gas turbines for land vehicle propulsion. Such engines usually employ a heat exchanger to recover some of the heat energy from the engine exhaust gases to enable the engine to operate with acceptable efficiency at part load.

A conventional layout of gas turbine engine usually comprises an axial array of components comprising in flow series, a compressor or compressors, a combustion system in which fuel is burnt with air from the compressors, a high pressure turbine or turbines driven by the gases from the combustion system and which in turn drive the respective compressors, and a low pressure power turbine to drive a load such as a vehicle through a suitable transmission system. A heat exchanger can be incorporated in such a conventional layout but the ducting to take the exhaust gases through one path of the heat exchanger and for the compressor delivery air to flow through the other path of the heat exchaanger would be complex and lengthy. The resulting conventional layout and heat exchanger would be relatively heavy and occupy a large volume.

In order to optimise the thermal efficiency of a heat exchanged gas turbine it is desirable that a high, high pressure turbine entry temperature (TET) is maintained particularly at part load conditions. It is also necessary to avoid excessive turbine entry temperatures at all times.

It is a characteristic of turbines in series, that as the overall engine pressure ratio falls, the division of work between the high and low pressure turbines changes such that the work share of the high pressure turbine increases. In a conventional layout, as the pressure ratio falls, the compressor driven by the high pressure turbine passes a proportionately higher mass flow of air and since the fuel flow is also falling with decreasing pressure ratio, the TET will fall reducing the engine thermal efficiency.

This problem can be met by providing adjustable nozzle guide vanes for the low pressure power turbine. These vanes enable the division of work between the compressor driving turbine and the power turbine to be adjusted so that the engine mass flow is controlled to give a reasonably high TET through the most useful part of the power range.

However, variable incidence power turbine nozzle guide vanes are undesirable for a number of reasons, e.g., inefficiencies arise from the leakage flow between the vane ends and the engine casings, and because the rotor geometry is fixed, the rotor blade incidences at the extremes of the nozzle guide vane movement are less than optimum. Also, reliable operation of variable vanes at high temperatures present significant design problems.

High temperature operation requires minimisation of the surface area of those components in contact with the hot gas stream, particularly since the component cooling medium may comprise the compressor delivery air which has already passed through the heat exchanger. An engine layout which has a combustor of minimum area directly coupled to the high pressure turbine would materially assist in surface area minimisation.

Access to components, particularly the high temperature components, in a conventionalheat exchanged gas turbine can be a problem and an engine layout in which the high temperature components, e.g. the combustor and the high pressure turbine are readily to hand; is desirable it is also desirable that the engine can be started by towing the vehicle in which the engine is located, and that the engine can provide a braking effect when the vehicle over-runs the engine. It is also necessary to provide some means of preventing over-speed of the high pressure turbine, e.g. in the event of a loss of load.

U.K. patent nos. 724177 and 1170793 both show prior designs of automotive gas turbine engines which attempt to overcome some of the problems associated with conventional heat exchanged gas turbine engines.

Both designs utilise a reverse flow layout, i.e., the high pressure turbine is the power turbine, and the low pressure turbine drives the engine compressor. The designs also have the capability of coupling the high and low pressure shafts together, under certain conditions.

These unconventional layouts enable the power plant to be compact and the ducting to and from the heat exchanger is minimised as compared with a conventional heat exchanged engine.

In patent no. 724177, the shafts are coupled together by means of gearing and a clutch, to prevent overspeeding of the power turbine on removal of the load.

In patent no. 1170793, the shafts are coupled together by gearing and a free-wheel to provide a braking effect when the vehicle over-runs the engine.

Although both of these prior specifications disclose designs which attempt to solve some of the problems posed by conventional heat exchanged engines neither recognise the potential for maintaining a high TET over the useful power range, and the problems at low power of excessively high TET's and of compressor surge inherent in the reverse flow layout characteristics.

The present invention seeks to provide a reverse flow heat exchanged automotive gas turbine engine which overcomes the problems outlined above and which avoids the problems associated with a conventional heat exchanged gas turbine.

In particular, the present invention seeks to provide a gas turbine engine for a land vehicle which can operate at high TET's over a useful power range, avoids excessively high TET's without the need for variable incidence power turbine nozzle guide vanes, and which prevents compressor surge and is compact.

The present layout is unconventional in that the high pressure turbine comprises the power turbine which drives the vehicle through a suitable transmission system, and the low pressure turbine drives the engine compressor. The power turbine does not have any variable incidence nozzle guide vanes.

This reverse flow cycle enables a high TET to be maintained over the most useful part of the power range, even at part load conditions. The aerodynamic and mechanical design of the engine enables the engine to operate either in a two shaft or single shaft mode, the two shaft mode enabling the high TET to be maintained and the single shaft mode preventing excessive TET's and compressor surge.

The reverse flow layout allows the combustor to be positioned at the downstream end of the engine and for the heat exchanger to be located in a position which minimises the length and complexity of the heat exchanger feed and exhaust ducting.

The surface area of the combustor and turbine entry duct can be minimised and both the combustor and the turbines are easily accessible since they are at one end of the engine and not buried within the engine by various casings and heat exchanger ducting.

The shafts can be coupled together by a sprag clutch, or any other suitable coupling device to enable the engine to operate in the two modes.

The engine compressor can comprise a centrifugal type of compressor because of its capability of handling a wide flow range.

The use of a sprag clutch or similar device brings a number of advantages. The power absorption capability of the compressor will be close to the nett full power output of the engine, so that continuous high power braking is possible when the vehicle over-runs the engine on down hill gradients. In these circumstances, it is desirable that a compressor exit bleed valve is provided to reduce the cooling effect on the heat exchanger.

Engine starting with a reverse flow layout can be a significant problem because the energy in the gas stream appears predominantly in the high pressure (power) turbine and there will be insufficient energy in the low pressure turbine to drive the engine compressor to render the engine self-sustaining. The sprag clutch enables the engine to operate in the single shaft mode during the starting operation because at low speeds the shafts will rotate together, and the high pressure turbine will assist the low pressure turbine. As soon as the engine is self-sustaining, the speed difference between the shafts can increase and the sprag clutch will disengage.

Another advantage of the ability to couple the shafts together is that a vehicle can be tow started because the engine can be driven through the vehicle transmission and the coupled engine shafts.

A further advantage is that over-speed of the power turbine (e.g. through loss of load) is checked by engagement of the sprag clutch. The engine then operates as a single shaft engine, and the high pressure turbine energy is absorbed in driving the engine compressor.

The sprag clutch can be arranged to engage/disengage when the shaft speeds are equal or when there is some pre-determined speed ratio between the two shafts. This latter condition can be accomplished by the use of a layshaft and an appropriate ratio gear box.

Accordingly, the present invention provides a gas turbine engine power plant comprising in flow series compressor means, heat exchange means having at least two flow paths in heat exchange relationship, compressor delivery air flowing through one of said flow paths, combustion means arranged to receive the compressor delivery air from the heat exchange means and a supply of fuel, high pressure turbine means arranged to receive the products of combustion and to drive a load through a first shaft, low pressure turbine means arranged to drive the compressor means through a second shaft, the exhaust gases from the low pressure turbine exhausting to atmosphere through the heat exchanger in heat exchange relationship with the compressor delivery air, the shafts having coupling means enabling the engine to operate in either a two shaft or a single shaft mode, the two shaft mode enabling the engine to operate at a high turbine entry temperature through a useful power range, and to operate in the single shaft mode to prevent excessive turbine entry temperatures and compressor surge.

The shaft engagement/disengagement may be arranged to occur when the shaft speeds are substantially the same, or at some pre-determined speed ratio between them.

The combustion means and the high pressure turbine means can be located at the downstream end of the engine, and the combustion means may be of the fully annular type and located at the most downstream end of the engine.

The high pressure turbine means may comprise an axial or a centripetal turbine. The low pressure turbine may comprise an axial flow turbine having one or more stages.

The first and second shafts can be co-axial and the output drive from the first shaft can be located at the front end of the engine.

In an alternative arrangement the engine can have a layshaft and a fixed ratio gear box connecting the first and second shafts together through the coupling means.

The coupling means between the two shafts may comprise a sprag clutch, but any free-wheel mechanism or clutch providing engagement or disengagement at the required speeds may be used.

The heat exchange means can comprise a stationary annular matrix having separate flow paths in heat exchange relationship for the compressor delivery air and the low pressure turbine exhaust gases.

The annular heat exchanger can be located axially so that it at least partially surrounds the high and/or the low pressure turbines.

The present invention will now be more particularly described with reference to the accompanying drawings in which:-

Fig. 1 shows a gas turbine power plant using a heat exchanger in which the gas turbine engine has a conventional layout.

Fig. 2 shows a gas turbine engine power plant according to the present invention.

Fig. 3 shows another engine according to the present invention having a modified layout to that shown in fig. 2.

Fig. 4 shows a further form of gas turbine engine power plant according to the present invention.

Fig. 5 shows the compressor characteristics of the compressor of the engines shown in figs. 2. 3 and 4, as a plot of pressure ratio v. a non-dimensional function indicative of compressor mass flow expressed as $M\sqrt{T}/P$ and,

Fig. 6 shows a plot of percentage power output v. percentage power turbine speed typical of the engines shown in figs. 2, 3 and 4.

Referring to the figures in fig. 1, a gas turbine engine power plant 10, comprises a two-stage centrifugal compressor 12 driven by a two stage axial turbine 14 through a shaft 16. The exhaust gases from the turbine drive a two-stage power turbine 18 which has variable inlet guide vanes 20, and the power turbine drives a load (not shown) <u>via</u> a shaft 22 and a gear box 24. The power turbine exhaust gases flow through a heat exchanger 26 in heat exchange relationship with delivery air from the compressor 12, which after being heated flows into a combustor 28 where it is mixed with fuel and burnt. The products of combustion then drive the turbine 14.

It will be noted that this arrangement results in a bulky engine occupying a large volume and requiring complex and lengthy feed and supply ducting for the heat exchanger. Also variable inlet guide vanes for the power turbine are required to control the division of work between the turbine 18 and the compressor driving turbine 14. Also, as shown the engine in a land vehicle application would not provide engine braking in an engine over-run situation. To achieve engine braking, a separate shaft (not shown) is required.

Referring to fig. 2, a gas turbine power plant 110 comprises a two stage centrifugal compressor 112 driven by a two stage low pressure axial turbine 114 via shaft 116. The compressor delivery air flows into a heat exchanger 126 which has a flow path for the compressed air in heat exchange relationship with hot turbine exhaust gases in another flow path, the flow paths not being shown.

The heated compressor delivery air flows into an annular combustion chamber 128 which also receives a supply of fuel, and where the fuel and air mixture is burnt. The products of combustion then flow through fixed nozzle guide vanes 120 to drive a high pressure turbine 118 which is arranged to drive a load (not shown) via a shaft 122 which is co-axial with the shaft 116, and located internally of the shaft 116. A free wheel mechanism 130 such as a sprag clutch, enables the shafts 116 and 122 to be coupled together and disengaged as will be described below.

The annular combustion chamber 128 is located at the rear end of the engine and is enclosed by a readily removable cover plate 132 which enables both the combustion chamber and the turbines 114 and 118 to be easily accessible.

The heat exchanger 126 is an annular matrix which partially surrounds the turbines 114, 118 thereby reducing the overall length of the power plant. The feed and supply ducting for the heat exchanger comprises a volute 134 at the outlet from the downstream stage of the compressor 112 feeding an inlet duct 136 to the heat exchanger, the inlet duct being approximately in the shape of an annular segment in section.

The feed for the heated compressor delivery air from the heat exchanger to the combustion chamber comprises an annular air casing 138, and the supply of hot exhaust gases to the heat exchanger also comprises an annular air casing 140.

It will be seen that the ducting for the heat exchanger is extremely simple and short in length, which enables weight and volume to be kept to a minimum.

In the case when the power plant is to be used for land vehicle propulsion, the power from the shaft 122 which it will be noted appears at the relatively cold front end of the engine will be taken to the vehicle traction through a transmission including a gear box (not shown). In general, gas turbine engines operate at peak efficiency at one design point only, the design point being defined by power, engine speed, altitude in the case of aero-engines and ambient conditions. At off design point conditions gas turbines are relatively inefficient as compared with diesel engines, for example. In order to improve the off design point efficiency, heat exchangers have to be used, and for maximum efficiency the engine should be run at a high temperature over the most used part of the engine power range. As shown in fig. 1, the high turbine temperature (TET) is obtained by the use of variable inlet guide vanes to the power turbine. This enables the division of work to be controlled as between the power turbine and the compressor driving turbine, thereby providing control of the compressor speed and mass flow. As already mentioned, the use of variable inlet guide vanes is undesirable for a number of reasons. The unconventional layout of the engine in fig. 2 in which the power turbine is constituted by the high pressure turbine and the low pressure turbine drives the engine compressor, avoids the need for these variable vanes and brings other advantages.

Land vehicles rarely operate at a constant power for long periods and powers tend to vary considerably within a power range of say 20%-100% of full power. The engine operates as a normal two shaft gas turbine when running within this power range.

In the case of the engine of fig. 2 as the speed falls, overall pressure ratio decreases and the division of work between the two turbines 114, 118 changes in favour of the high pressure turbine 118. The low pressure turbine speed falls more rapidly as compared with a conventional layout (fig. 1) and thus the compressor speed and part load mass flow is less and TET is kept high without the need for variable inlet guide vanes on the power turbine.

Referring to fig. 5, the engine of fig. 2 has to operate within the area defined by the surge line and the choke line with a margin between the surge line and the actual line along which the engine operates. The engine performance is also optimised for the most used power range, i.e. over this range, TET is kept high, and component efficiencies are optimum.

With the arrangement of fig. 2 as the power reduces, the surge margin reduces and in order to maintain a working surge margin the engine is operated in a single shaft mode at these lower powers. This mode as achieved by the use of the free wheel mechanism 130 which engages naturally to couple the shafts 116, 122 together because the low pressure shaft speed falls more rapidly than the high pressure shaft speed during deceleration. As soon as power increases the shafts will automatically disengage to return the engine to the two-shaft operation mode. The speed at which engagement and disengagement occurs can be chosen by suitable aero-dynamic design of the turbines.

The use of the free-wheel mechanism allows the engine to provide a braking effect on the vehicle when the vehicle over-runs the engine on downhill gradients. This is because in this condition the engine will be in the single shaft mode and the power absorption capability of the compressor is close to the nett full power out put of the engine. In this situation, the compressor would preferably need an exit bleed valve to reduce the cooling effect on the heat exchanger.

Also, the free-wheel mechanism allows the vehicle to be tow started and aids considerably engine starting in general, since unless the shafts are coupled, it is impossible for the engine to be self sustaining at low powers. It will be appreciated that the arrangement of fig. 2 provides an extremely compact heat exchanged engine which is self controlling as far as TET over most of the power range is concerend, is easily accessible, and provides a braking effect without the need for external shafting. The engine configuration also checks power turbine overspeed in the event of loss of load.

Although the engine is primarily intended for land vehicle propulsion, it can be adapted for aero-propulsion, e.g. helicopters.

The arrangement shown in fig. 3 is similar to the arrangement shown in fig. 2 and the same components have been given the same references. In this engine, the axial high pressure turbine 118 has been replaced by a centripetal turbine 118<u>a</u>. A characteristic of centripetal turbines is that capacity changes with speed. At high speeds, the capacity is lower than that at low speeds, as compared with an axial turbine in which capacity is fairly constant with speed. As has already been discussed the work share of the high pressure turbine increases as the engine pressure ratio decreases, and depending upon the capacity required of the high pressure turbine at part load conditions, a centripetal turbine may offer a more flexible design choice than an axial turbine.

In all other respects, this engine operates in the same way as the engine of fig. 2 and has the same advantages.

The arrangement shown in fig. 4 is similar to the arrangements shown in figs. 2 and 3, and once again the same components have been given the same reference numbers. In this case, the high pressure turbine 118b is of the axial type and comprises two stages and the low pressure turbine 114a is also of the axial type and comprises one stage only.

The engine compressor 112a is of the axial type and comprises two stages, and includes variable incidence inlet guide vanes 138.

The most important difference lies in the manner in which the shafts 116 and 122 are coupled together.

At each end of the engine are fixed ratio gear boxes 140, 142 which are connected together by a two part layshaft 144. The two parts of the layshaft are joined by a coupling 146, and the lay shaft passes through an insulated tunnel 148.

In gear box 140, the power turbine shaft 122 drives a gar 150 which in turn drives a gear 152 mounted on the layshaft 144. In gar box 142, a gear 154 on the layshaft drives a gear 156 on a shaft 158. The shaft 158 extends into an extension of the compressor shaft 116 which contains the sprag clutch 130. In effect, the shaft 158 is an extension of the shaft 122.

As illustrated, the shaft 158 will run at the same speed as the shaft 122 and the sprag clutch is designed to engage/disengage when the compressor shaft 116 speed is the same as the power turbine speed.

However, the gear boxes 140,142 are designed so the gear ratios can be changed by the use of different diameter gears enabling the shaft 158 to run at a different speed to the shaft 122. The sprag clutch can be designed so that it will engage/disengage at some pre-determined speed ratio between the shafts 158 and 116. This will allow the engine to be more flexible, and in effect allows the engage/disengage line on fig. 6, as will be explained below, to be more to the left or right. In an alternative arrangement, either one or both of the gear boxes 140, 142 can be a variable change speed gear box.

It may be necessary, in order to prevent excessive turbine temperatures at lower powers during high ambient air intake temperatures to provide some means of varying the characteristics of the low pressure turbine nozzle guide vanes, so that the work split between the turbines can be more closely controlled. In fig. 4, these vanes are referenced 114a and are shown as being of variable incidence. Although as mentioned above, variable incidence vanes are to be avoided if possible, the degree of variation required for the low pressure turbine is considerably less than would be required if the vanes had to be varied on the high pressure turbine. Also, it may be possible to vary the incidence of only part of the vanes, or to vary the vane characteristics by aerodynamic means. For example by blowing air from vanes into the nozzle passages between adjacent vanes or by bleeding air from these passages.

By varying the nozzle characteristics at low engine powers so that the pressure drop across the low pressure turbine increases, the low pressure turbine will do more work and the low pressure compressor mass flow will be higher. The air fuel ratio will then be such that the combustion and turbine entry temperatures will be lower than they would have been if the low pressure turbine work had not been increased.

Fig. 6 illustrates graphically the effect of the engine operating in a two shaft or a single shaft mode and applies to the layouts shown in figs. 2, 3 and 4.

The figure comprises a plot of power turbine speed v. power output, both parameters expressed as percentages of the maximum possible. There are two plots A and B, the plots referring to speed ranges of the vehicle having a ratio of 1:1.6. Imposed on the graph are lines of constant turbine entry temperature which apply in the two shaft and single shaft modes. In the bottom right hand corner in the shaded zone, there is an indication of the predicted turbine entry temperatures if the engine was not able to operate in a single shaft mode, and the likelihood of compressor surge.

In the normal course of operation when the vehicle is accelerating or travelling at a reasonably constant speed, the engine will be running in the two shaft mode e.g. the low pressure shaft will be running faster than the high pressure shaft and the sprag clutch will be disengaged. So the engine will be operating between the two plots A and B at temperatures within the range of approximately 1350°K to 1550°K.

When the vehicle is decelerating, or when it is being driven by the vehicle, or when it is being tow started, or in the event of a turbine overspeed, the high pressure turbine will be rotating faster than the low pressure shaft and the sprag clutch will engage causing the engine to operate in the single shaft mode. The turbine entry temperatures will follow the lines to the right of plot B, i.e. lines of gradually diminishing temperature.

The shaded area under plot C indicates the turbine entry temperatures if the engine were allowed to continue operating in the two shaft mode. These temperatures would rise to over 2000°K which could not be tolerated by present day turbine materials even with blade cooling. Also, and just as importantly, the engine compressor would surge, causing still further rises in temperature, and thermal inefficiency.

It will therefore be seen that by arranging for the engine to operate in the correct mode, i.e. two shaft or single shaft, to suit the prevailing conditions, excessive turbine entry can be avoided, and the engine can be run at temperatures within a reasonably high restricted temperature range to give good thermal efficiency at maximum power and at part load, at least within a wide speed range of the vehicle.

The plot B is the locus of points at which the power turbine speed equals the compressor speed, thus it represents the locus of points at which the sprag clutch engages/disengages. As previously mentioned, the sprag clutch can be arranged to engage or disengage when the speed ratio between the two shafts is at a certain value, this being attained by use of the layshaft (see fig. 4). In this case, the plot B is the locus of points at which the speed ratio between the two shafts is at a pre-determined value.

Claims:-

1. A gas turbine engine power plant comprising in flow series compressor means, heat exchange means having at least two flow paths in heat exchange relationship, compressor delivery air flowing through one of said flow paths, combustion means arranged to receive the compressor delivery air from the heat exchange means and a supply of fuel, high pressure turbine means arranged to receive the products of combustion through stationary guide vanes and to drive a load through a first shaft, low pressure turbine means arranged to drive the compressor means through a second shaft and being located axially in front of the high pressure turbine means, the exhaust gases from the low pressure turbine means exhausting to atmosphere through the heat exchange means in heat exchange relationship with the compressor deliv air, the shafts having coupling means enabling the engine to operate either a two shaft or a single shaft mode, the two shaft mode enabling the engine to operate at a high turbine entry temperature through a useful speed range, and to operate in the single shaft mode, to prevent excessive turbine entry temperatures and compressor surge.

2. A power plant as claimed in claim 1 in which the compressor means comprises two centrifugal compressors in series.

3. A power plant as claimed in claim 1 in which the compressor means comprises an axial compressor and a centrifugal compressor.

4. A power plant as claimed in claim 3 in which the axial compressor has a ring of variable incidence inlet guide vanes.

5. A power plant as claimed in claim 1 in which the compressor means has a radially directed inlet.

6. A power plant as claimed in claim 1 in which the high pressure turbine means comprise the axial type of turbine.

7. A power plant as claimed in claim 6 in which the high pressure turbine comprises a single stage axial turbine.

8. A power plant as claimed in claim 6 in which the high pressure turbine comprises a two stage axial turbine.

9. A power plant as claimed in claim 1 in which the high pressure turbine comprises a centripetal turbine.

10. A power plant as claimed in claim 1 in which the low pressure turbine means comprise the axial type of turbine.

11. A power plant as claimed in claim 10 in which the axial turbine comprises a single stage turbine.

12. A power plant as claimed in claim 10 in which the axial turbine comprises a two stage turbine.

13. A power plant as claimed in claim 10 in which the low pressure turbine means includes nozzle guide vanes, the characteristics of which can be varied.

14. A power plant as claimed in claim 13 in which nozzle guide vanes are of variable incidence.

15. A power plant as claimed in claim 1 in which the first and second shafts are co-axial and the power output from the first shaft is located at the front end of the engine.

16. A power plant as claimed in claim 1 in which the coupling means comprises a sprag clutch.

17. A power plant as claimed in claim 1 in which the combustion means comprises an annular combustion chamber located at the rear end of the engine.

18. A power plant as claimed in claim 1 in which the heat exchange means comprises an annular matrix which is axially located so as to at least partially surround the turbine means.

19. A power plant as claimed in claim 1 in whichthe first and second shafts are coupled together through the coupling means <u>via</u> a lay shaft and gearing on the first and second shafts.

20. A power plant as claimed in claim 19 in which the gearing comprises a first gear box having a fixed speed ratio gearing transmitting drive from the first shaft to the lay shaft, and a second gear box having a fixed speed ratio transmitting the drive from the lay shaft to the second shaft.

21. A power plant as claimed in claim 1 in which the first and second shafts are arranged to engage or disengage when the speeds of the two shafts are equal.

22. A power plant as claimed in claim 1 in which the first and second shafts are arranged to engage or disengage at a pre-determined speed ratio between the two shafts.

23. A power plant as claimed in claim 1 in which the engine is capable of operating in a two shaft mode within a vehicle speed range of 1:1.6 and a temperature range of 1350°K to 1550°K, and in a single shaft mode at a temperature not exceeding 1550°K, and so as to prevent compressor surge.

24. In a reverse flow gas turbine engine in which the high pressure turbine drives a load and the low pressure turbine drives the engine compressor, the method of operating the engine either in a two shaft or single shaft mode, the shafts being coupled together at a pre-determined speed ratio between them, so that in the two shaft mode the high pressure turbine entry temperature lies within the range 1350°K to 1550°K in a vehicle speed range of 1:1.6, and in the single shaft mode compressor surge is avoided and the turbine entry temperature does not exceed 1550°K.

25. A gas turbine engine power plant as claimed in claim 1 having the percentage power turbine speed v. percentage power output characteristics as set out in fig. 6.

26. A gas turbine engine power plant constructed and arranged for use and operation substantially as herein described, and with reference to fig. 2, fig. 3 and fig. 4.

27. In a gas turbine engine power plant as claimed in claim 26, the method of operating to produce the characteristics as set in fig. 5 and or fig. 6.

Fig. 1.

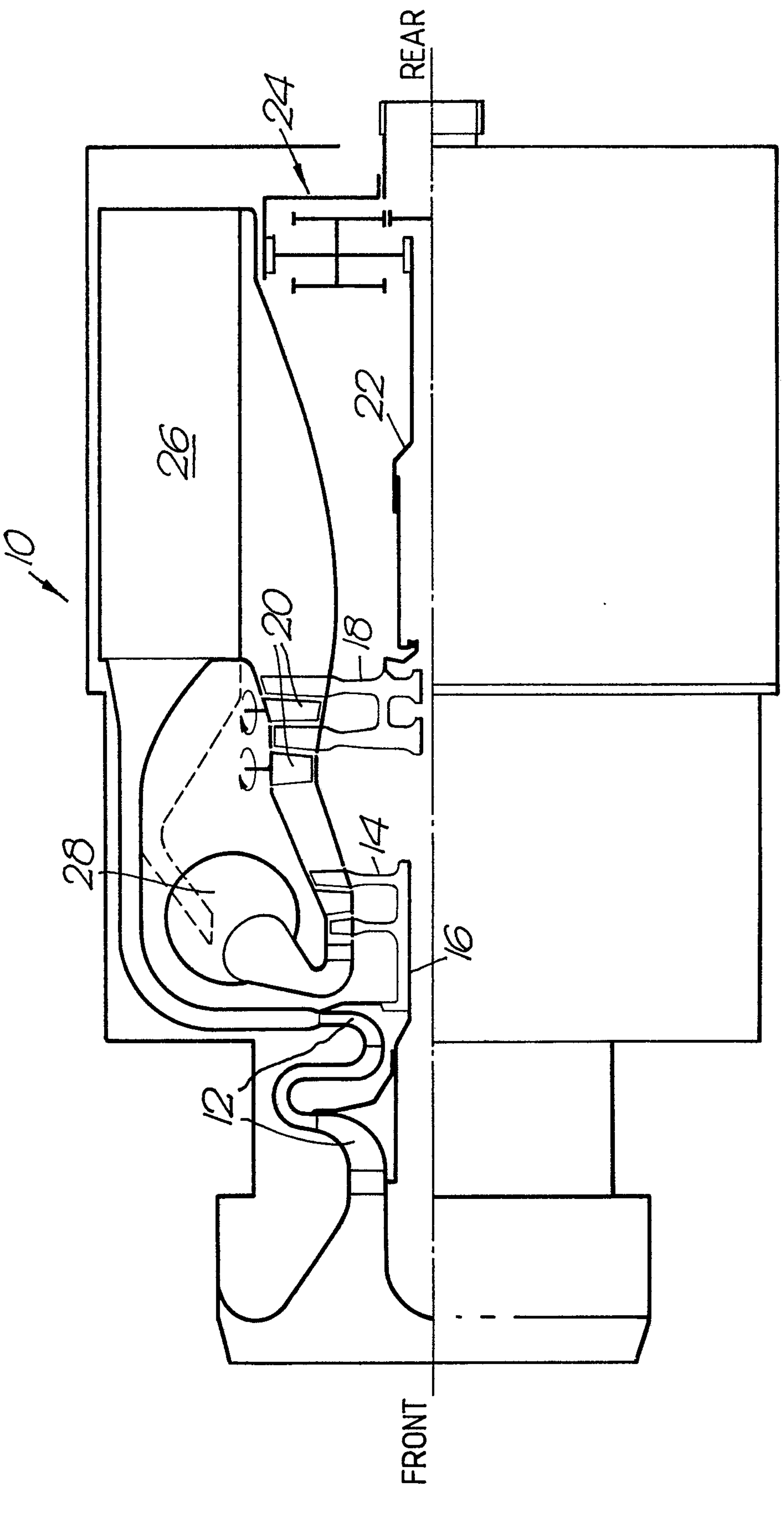

Fig. 2.

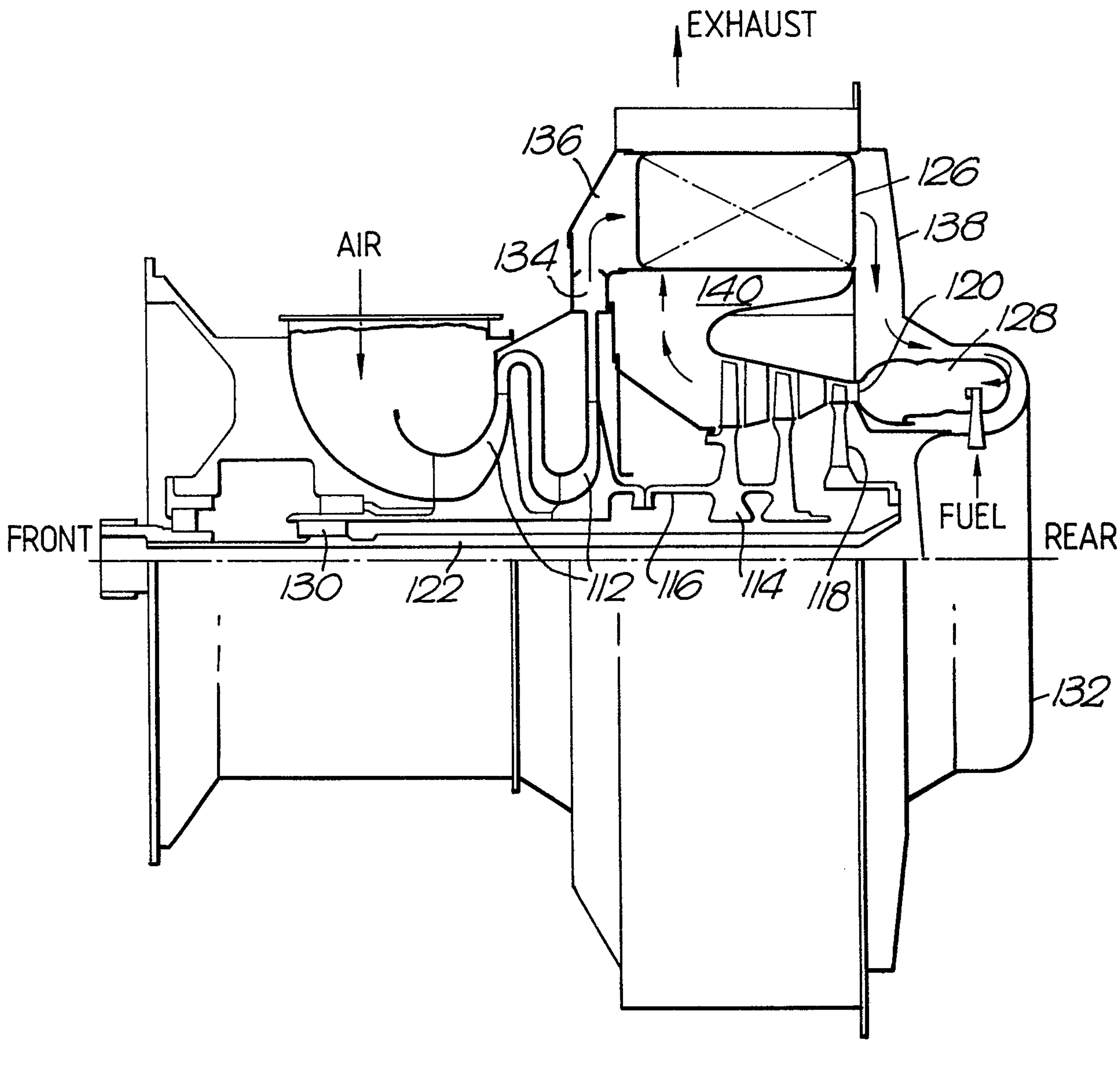
EXHAUST
136
126
138
AIR
134
140
120
128
FUEL
FRONT
REAR
130
122
112
116
114
118
132

Fig. 3.

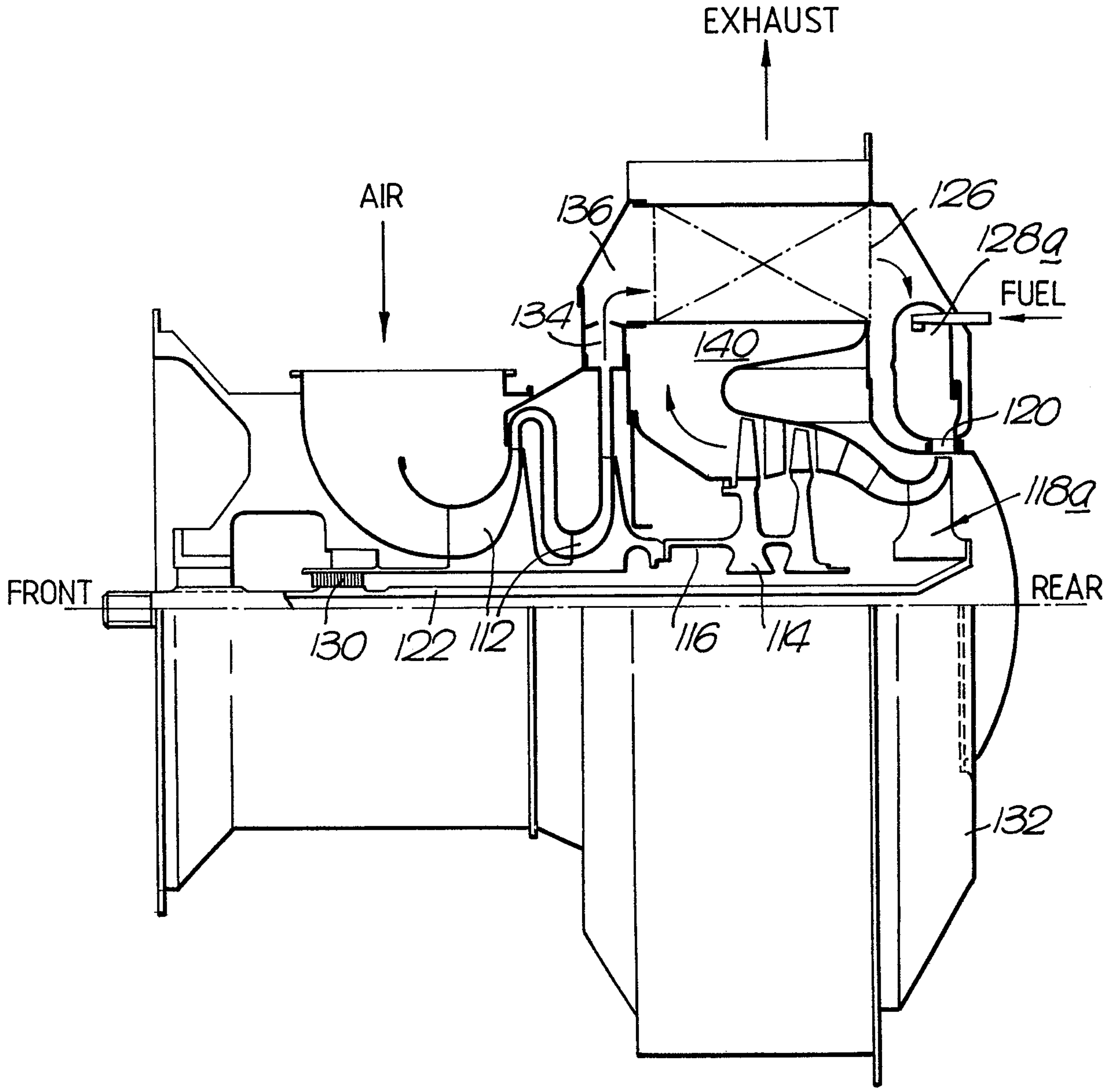
EXHAUST
AIR
FUEL
FRONT
REAR
136
126
128a
134
140
120
118a
130
122
112
116
114
132

Fig. 4.

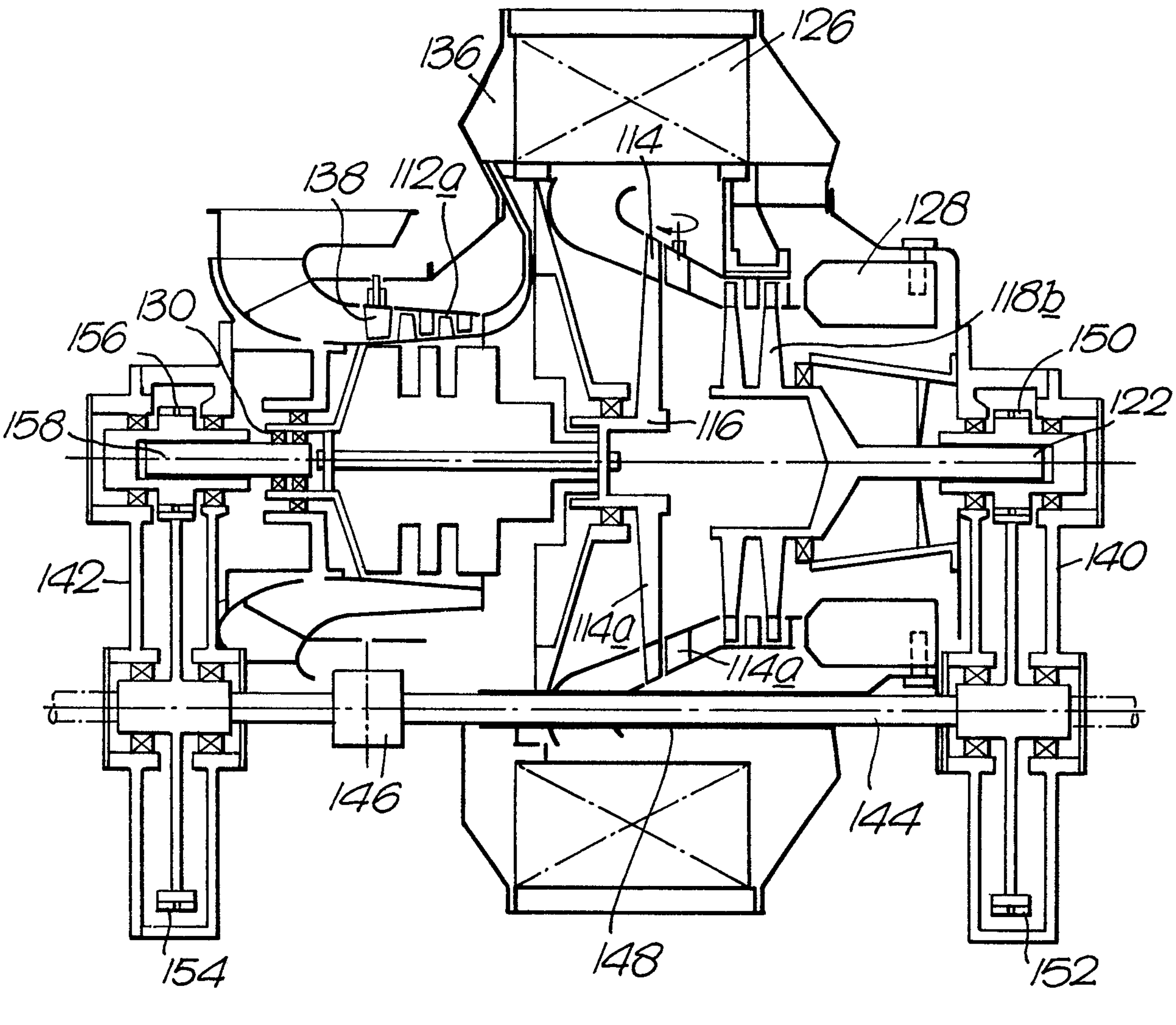

126
136
114
138
112a
128
118b
130
156
150
122
158
116
142
140
114a
114a
146
144
148
154
152

Fig.5.

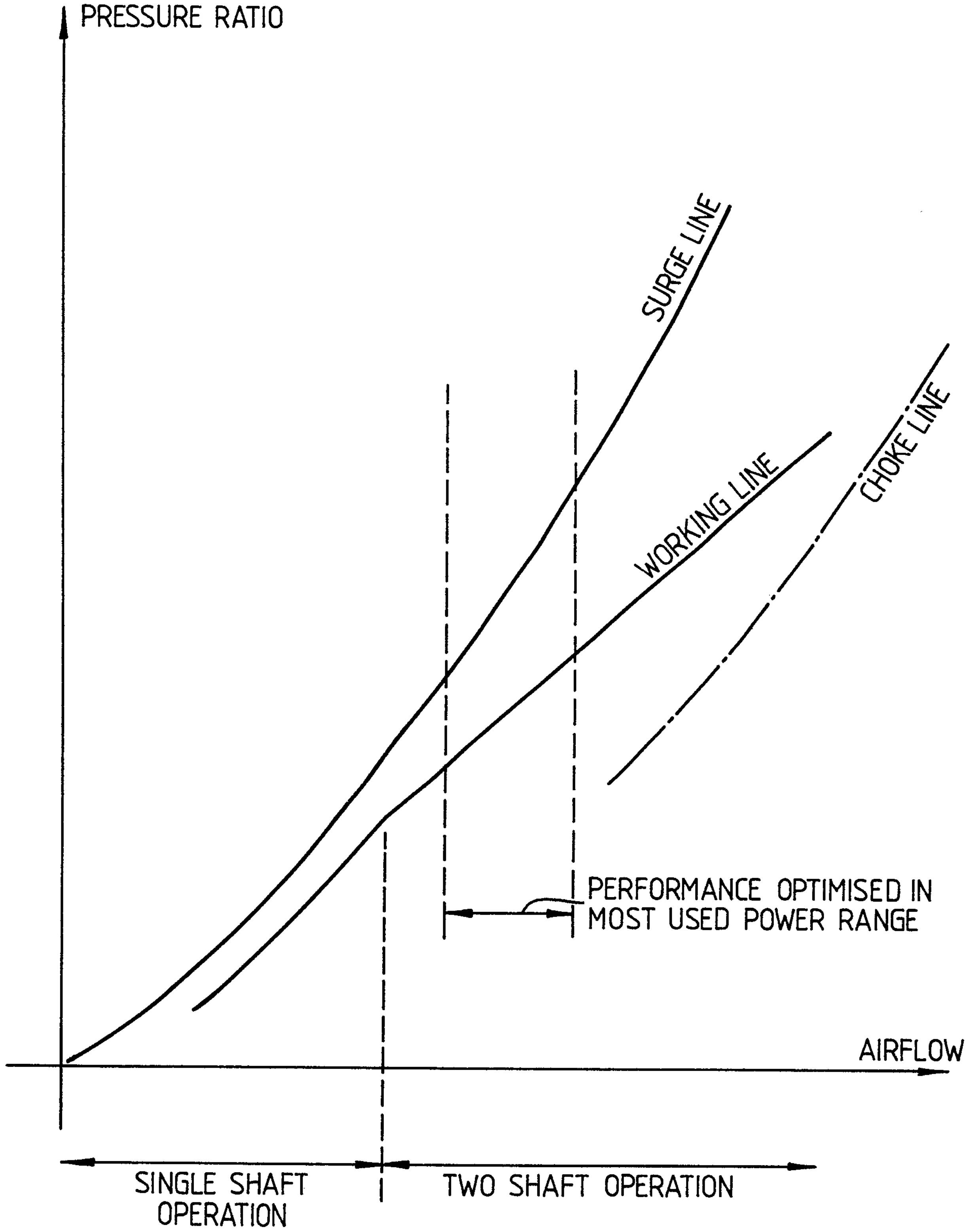
PRESSURE RATIO
SURGE LINE
WORKING LINE
CHOKE LINE
PERFORMANCE OPTIMISED IN MOST USED POWER RANGE
AIRFLOW
SINGLE SHAFT OPERATION
TWO SHAFT OPERATION

Fig. 6.

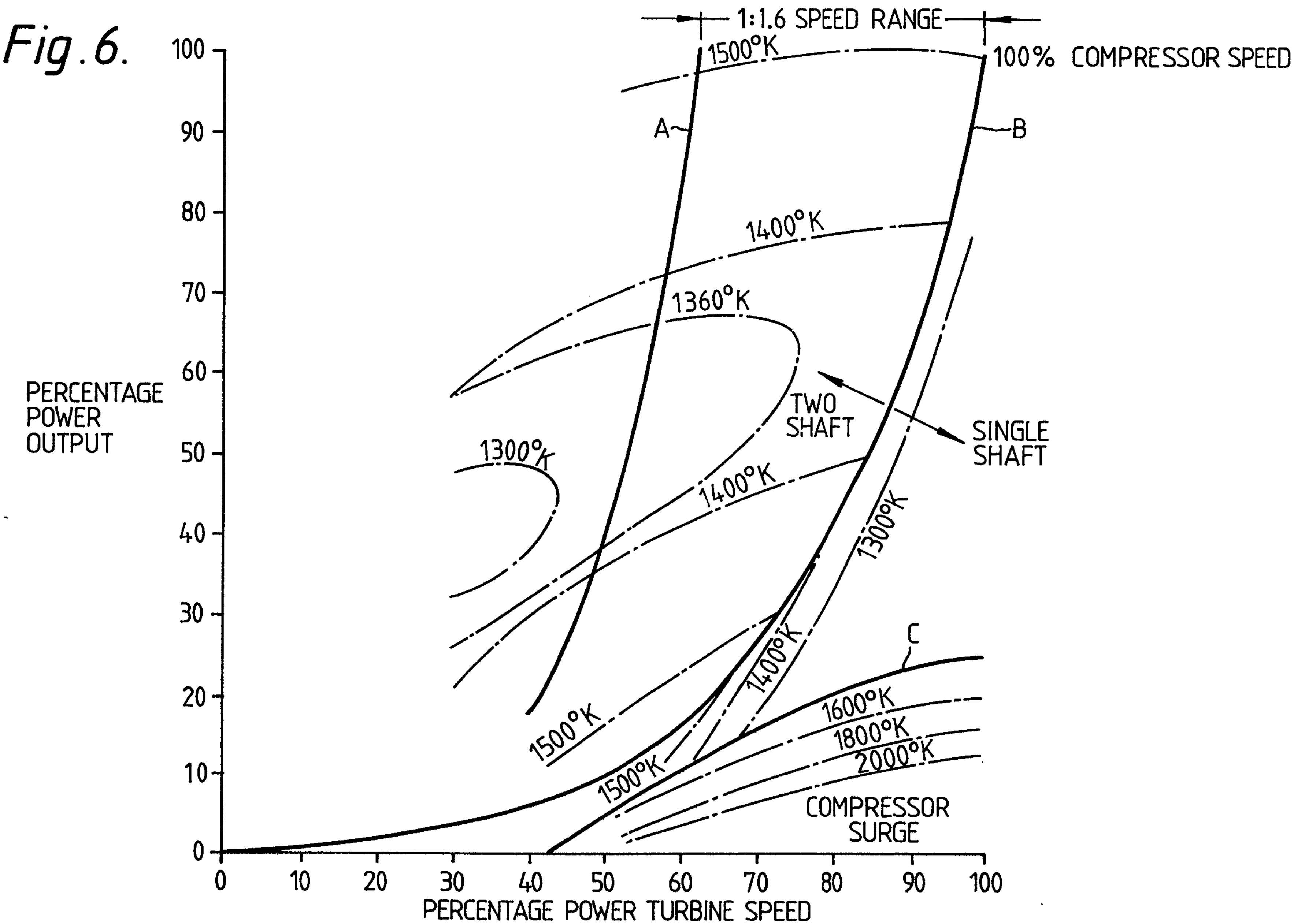
1:1.6 SPEED RANGE
100% COMPRESSOR SPEED
1500°K
A
B
1400°K
1360°K
TWO SHAFT
SINGLE SHAFT
1300°K
1400°K
1300°K
1400°K
1500°K
1500°K
C
1600°K
1800°K
2000°K
COMPRESSOR SURGE
PERCENTAGE POWER OUTPUT
PERCENTAGE POWER TURBINE SPEED
0
10
20
30
40
50
60
70
80
90
100

0103370

European Patent Office

# EUROPEAN SEARCH REPORT

Application number

EP 83 30 4089

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,D | GB-A-1 170 793 (FIAT)<br>* Whole document * | 1,2,5-7,10,11,16,19,21,22 | F 02 C 3/10<br>F 02 C 7/36 |
| Y,D | | 3,4,8,9,12,15,17,18,20 | |
| | --- | | |
| Y | US-A-3 365 892 (DERDERIAN)<br>* Column 2, lines 15-32; column 3, lines 23-34; figures 3, 4 * | 3,4 | |
| | --- | | |
| Y | FR-A-1 183 239 (DAIMLER-BENZ)<br>* Page 2, column 1, lines 34-43; figure 1 * | 8 | **TECHNICAL FIELDS SEARCHED (Int. Cl. 3)** |
| | --- | | |
| Y | DIESEL ENGINEERING, vol. 74, no. 797, 1978 "KG5 from Kongsberg", page 122 | 9 | F 02 C 3/08<br>F 02 C 3/10<br>F 02 C 7/36<br>F 02 C 9/20 |
| | --- | | |
| Y | GB-A- 775 786 (LIUNGSTRÖM)<br>* Figure 1 * | 12 | |
| | --- | | |
| A | US-A-4 118 927 (KRONOGARD)<br>* Column 5, lines 40-47; figure 1 * | 13,14 | |
| | --- -/- | | |

The present search report has been drawn up for all claims

| Place of search | Date of completion of the search | Examiner |
|---|---|---|
| BERLIN | 28-10-1983 | NORDSTROEM U.L.N. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

0103370

European Patent Office

# EUROPEAN SEARCH REPORT

Application number

EP 83 30 4089



## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y,D | GB-A- 724 177 (PARSONS) * Page 2, lines 97-108; figure 4 * | 15,18 | |
| Y | GB-A- 713 839 (ENTICKNAP) * Page 1, lines 62-66; claims 1, 3; figure 1 * | 17 | |
| Y | DE-C- 811 891 (BOWDEN et al.) * Figure 1 * | 20 | |
| A | J. KRUSCHIK "Die Gasturbine", 2nd edition, 1960, SPRINGER-VERLAG, Wien, pages 416-421, 427-428 | | |

TECHNICAL FIELDS SEARCHED (Int. Cl. 3)

The present search report has been drawn up for all claims

| Place of search | Date of completion of the search | Examiner |
|---|---|---|
| BERLIN | 28-10-1983 | NORDSTROEM U.L.N. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03 82